# FASCICULE DE BREVET EUROPEEN

(11) **EP 2 086 801 B1**
(45) Date de publication et mention de la délivrance du brevet: **28.04.2010**
(21) Numéro de dépôt: 07821409.5
(22) Date de dépôt: 16.10.2007
(51) Int. Cl.: B60R 25/04, B60R 25/02

(54) **ROTOR DE VERROU POUR VEHICULE AUTOMOBILE**
SCHLIESSZYLINDER FÜR EIN KRAFTFAHRZEUG
LOCKING CYLINDER FOR A MOTOR VEHICLE

(30) Priorité: 30.10.2006 FR 0609530
(43) Date de publication de la demande: 12.08.2009
(73) Titulaire: Valeo Securité Habitacle, 94042 Créteil (FR)
(72) Inventeur: GIACOMIN, FABRICE, F-94042 Creteil (FR)
(74) Mandataire: Jacquot, Ludovic R. G.
(86) Numéro de dépôt international: PCT/EP2007/061044
(87) Numéro de publication internationale: WO 2008/052882

(56) Documents cités:
- DE-U1- 9 320 270
- FR-A1- 2 788 479

## Description

La présente invention concerne un rotor de verrou, ainsi qu'un verrou d'antivol comprenant un tel rotor, notamment un verrou d'antivol de véhicule automobile.

Elle s'applique typiquement, mais non exclusivement, au domaine des antivols comportant un interrupteur électrique pour la détection de l'introduction d'une clef dans un verrou.

Le document FR 2 788 479 propose un antivol comprenant un interrupteur électrique utilisé en association avec un circuit électrique, l'introduction de la clef dans le verrou étant détectée préalablement en vue de déclencher par exemple le préchauffage du moteur le plus rapidement possible, notamment dans le cas d'un moteur diesel.

L'interrupteur est du type comportant une tige de commande susceptible de se déplacer sous l'action d'un palpeur de commande du déclenchement de l'interrupteur, monté mobile en coulissement sous l'action de la clef dans un logement du verrou.

Ledit palpeur, rappelé élastiquement vers sa position de repos par des moyens élastiques de l'interrupteur électrique, est en contact direct avec la tige de commande de l'interrupteur.

La partie d'extrémité avant du palpeur qui est poussée par la clef, coopère avec une rampe agencée à l'intérieur du rotor. Cette rampe provoque un déplacement de la partie d'extrémité avant du palpeur selon une direction inclinée par rapport à l'axe d'introduction de la clef.

Ledit palpeur se déplace ainsi entre une position basse de repos et une position haute, inclinée par rapport à cet axe, dans le sens d'introduction de la clef.

Lorsque le palpeur se déplace de la position basse à la position haute inclinée, l'extrémité arrière du palpeur pousse la tige de commande, afin de déclencher l'interrupteur électrique.

Cependant, lors de la translation de la clef dans le rotor, les pièces constitutives de l'interrupteur électrique subissent une usure prématurée à cause de la composante radiale de ladite poussée, du fait de l'inclinaison du palpeur.

En effet, ladite inclinaison impose une poussée sur la tige de commande ayant une composante longitudinale et, également, une composante radiale.

De plus, les moyens élastiques de rappel du palpeur, incorporés à l'interrupteur, ne sont pas optimisés pour ramener le palpeur dans sa position initiale, lors du retrait de la clef.

L'invention vise à résoudre les problèmes de l'art antérieur en proprosant un dispositif d'antivol permettant d'améliorer le déclenchement de l'interrupteur électrique via le palpeur.

A cet effet, l'invention a pour objet un rotor comprenant un logement longitudinal, ledit logement contenant un palpeur de commande, destiné à déclencher un interrupteur électrique pour la détection de l'introduction d'une clef dans le rotor, ledit palpeur étant monté en coulissement, parallèlement à l'axe d'introduction de la clef, la partie d'extrémité avant du palpeur, qui peut être poussée par la clef, coopérant avec des moyens du logement formant une rampe pour provoquer un déplacement de ladite partie d'extrémité avant, selon une direction inclinée par rapport à l'axe d'introduction de la clef entre une position basse de repos et une position haute de déclenchement, le logement contenant en outre un moyen de déclenchement de l'interrupteur, en butée avec l'extrémité arrière du palpeur, ledit moyen de déclenchement pouvant se déplacer uniquement en coulissement, parallèlement à l'axe d'introduction de la clef.

Grâce à l'invention, l'usure prématurée de l'interrupteur électrique, provoquée par la poussée radiale du palpeur, ainsi que les coincements accidentels du palpeur autant dans sa position basse de repos que dans sa position haute de déclenchement, sont évités.

Selon une caractéristique de l'invention, le moyen de déclenchement de l'interrupteur comprend une fourche, bloquant l'extrémité arrière du palpeur dans une direction perpendiculaire à l'axe d'introduction de la clef.

Dans un mode de réalisation, le logement contient en outre un organe de retenue, apte à retenir le moyen de déclenchement de l'interrupteur à l'intérieur dudit logement.

Selon un exemple particulier, l'organe de retenue est une bague cylindrique formant palier pour le moyen de déclenchement. Cette bague peut également, par exemple, être carrée.

Dans un autre mode de réalisation, le logement contient en outre un organe de rappel en position de repos, apte à ramener le palpeur en position basse de repos lorsque la clef est retirée du rotor.

De façon particulièrement avantageuse, lorsque le logement du rotor contient un organe de retenue, l'organe de rappel est intercalé entre une bride annulaire du moyen de déclenchement de l'interrupteur et l'organe de retenue.

Le rotor peut ainsi être facilement intégré à un barillet de verrou d'un antivol. Dans ce type de verrou, l'interrupteur électrique, déclenché par ledit moyen de déclenchement, est relativement simple de conception puisqu'il ne comporte ni de tige de commande, ni de moyens élastiques.

Dans un exemple particulier, lorsque le moyen de déclenchement est pourvu d'une fourche bloquant l'extrémité arrière du palpeur dans une direction perpendiculaire à l'axe d'introduction de la clef, le palpeur comprend un corps en forme de plaque, qui comprend une lumière longitudinale, apte à coopérer avec la fourche lorsque le palpeur est en position haute de déclenchement.

La lumière longitudinale est prévue pour recevoir la fourche, et permet ainsi au palpeur de ne pas être bloquée par la fourche lorsque le palpeur est en position haute.

Selon un autre aspect, l'invention concerne un verrou d'antivol comprenant un rotor selon l'invention.

D'autres caractéristiques et avantages de la présente invention apparaîtront à la lumière de la description détaillée qui suit, en référence aux dessins annotés, lesdits dessins étant donnés à titre illustratif et nullement limitatif.

La figure 1 représente une vue éclatée d'un rotor selon l'invention.

La figure 2 représente une vue partielle en coupe longitudinale d'un rotor selon l'invention, lorsque le palpeur est en position basse de repos.

La figure 3 représente une vue partielle en perspective d'un rotor selon l'invention, lorsque le palpeur est en position basse de repos.

La figure 4 représente une vue partielle en perspective d'un rotor selon l'invention, lorsque le palpeur est en position haute de déclenchement.

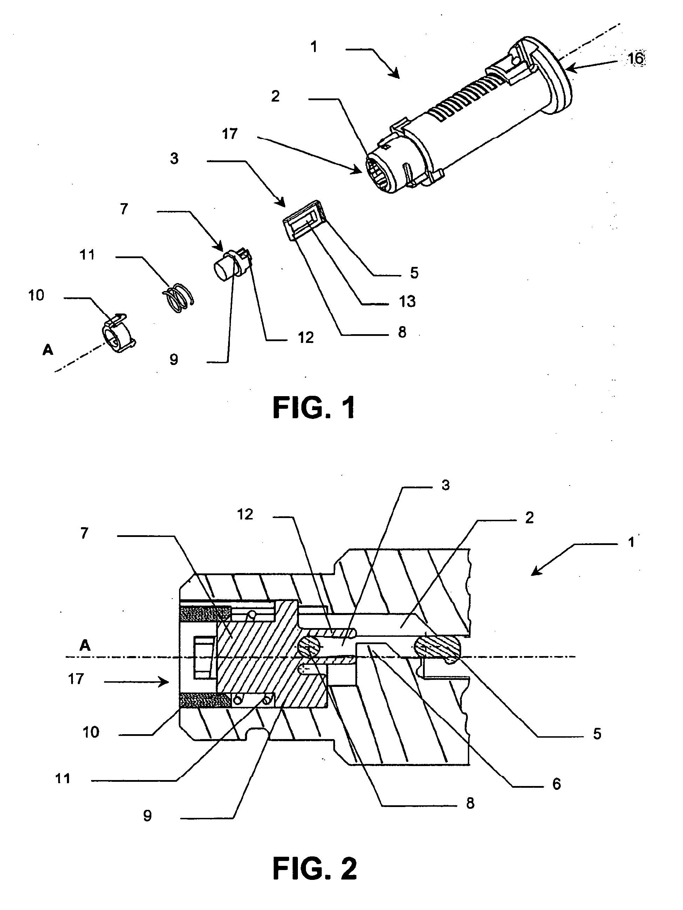

La figure 1 représente les principaux composants d'un exemple de réalisation d'un rotor 1 de verrou de véhicule automobile, conforme à l'invention.

La face avant 16 du rotor 1 est définie comme la face d'entrée d'une clef et la face arrière 17 dudit rotor représente la face à proximité d'un interrupteur électrique.

Le rotor 1 comprend un logement 2 dans lequel un palpeur 3, un moyen de déclenchement 7 de l'interrupteur, un organe de rappel 11 et un organe de retenue 10 sont agencés.

Le palpeur 3 est un corps en forme de plaque comprenant une lumière 13 longitudinale.

L'extrémité avant 5 du palpeur 3 est en forme de barre transversal cylindrique.

Le moyen de déclenchement 7 est un cylindre, pourvu d'une bride annulaire 9 et comportant à son extrémité avant une fourche 12, ladite fourche recevant l'extrémité arrière 8 du palpeur 3.

L'organe de rappel 11 est un moyen élastique par exemple de type ressort hélicoïdal. Le ressort 11 repose sur la bride annulaire 9, le moyen de déclenchement 7 s'emboîtant à l'intérieur du ressort 11.

Enfin, l'organe de retenue 10 est une bague cylindrique dont la section intérieure est supérieure à la section du moyen de déclenchement 7 cylindrique.

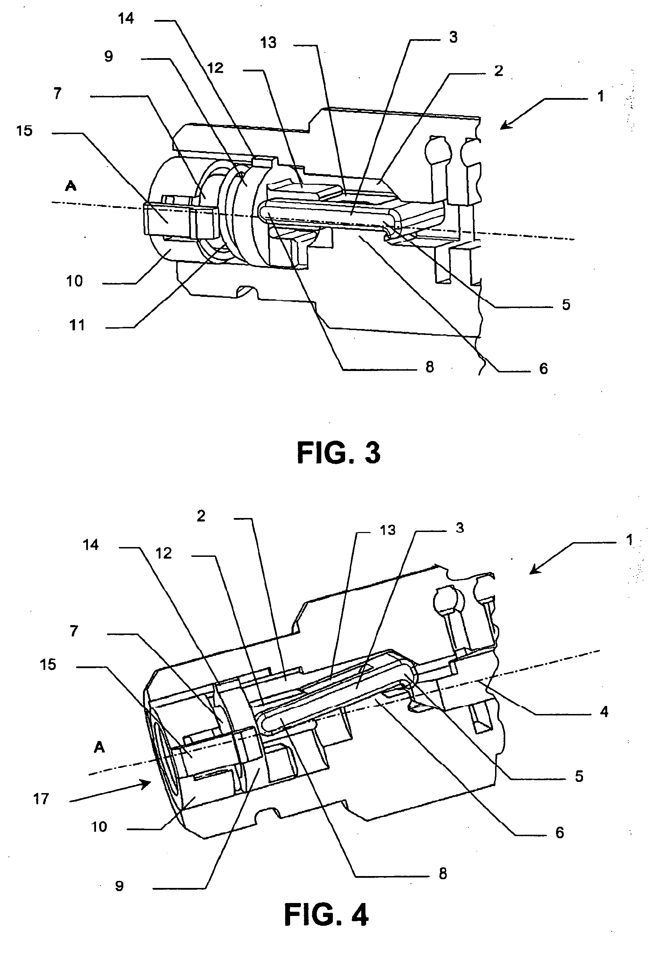

Comme représenté sur les figures 2 et 3, le palpeur 3 est en position basse de repos.

Le logement 2 comprend une rampe 6 pour provoquer le déplacement du palpeur 3 en position haute, inclinée par rapport à l'axe A.

La lumière 13 longitudinale dudit palpeur 3 est prévue pour recevoir la rampe 6.

La fourche 12 du moyen de déclenchement 7 bloque l'extrémité arrière 8 du palpeur en translation dans une direction perpendiculaire à l'axe A d'introduction de la clef, mais permet au palpeur 3 de s'incliner grâce notamment à la lumière 13 longitudinale coopérant avec la fourche 12.

La bride annulaire 9 du moyen de déclenchement 7 vient en butée contre une paroi du logement 2 lorsque le palpeur 3 est en position basse de repos.

Cette bride annulaire 9 comporte une bride longitudinale 14, comme illustré sur la figure 3, glissant dans une rainure du logement 2 pour éviter au moyen de déclenchement 7 de tourner sur son axe longitudinal.

L'ensemble formé par le palpeur 3, le moyen de déclenchement 7 et l'organe de rappel 11 est maintenu à l'intérieur du logement 2, à l'aide de la bague cylindrique 10.

La bague cylindrique 10 est clipsée à l'intérieur du logement 2 du rotor, à l'extrémité de la face arrière 17 du rotor, à l'aide d'ergots 15 et permet de stopper le coulissement du moyen de déclenchement 7 en venant en contact avec la bride annulaire 9 dudit moyen de déclenchement 7.

Le moyen de déclenchement 7 est apte à coulisser à l'intérieur de la bague cylindrique 10 pour pouvoir venir en contact avec l'interrupteur électrique.

Sur la figure 4, une clef 4 a été introduite dans le rotor 1 par la face d'entrée 16 du rotor.

Lorsque l'on introduit la clef 4 dans le rotor 1, ladite clef vient coopérer avec l'extrémité avant 5 du palpeur 3.

Le palpeur est alors déplacé en coulissement à l'intérieur du logement 2, parallèlement à l'axe A d'introduction de la clef 4, la rampe 6 provoquant le déplacement dudit palpeur 3 en position haute, inclinée par rapport à l'axe A.

Le palpeur 3, tout en coulissant dans le logement 2, est emboîté dans la fourche 12 du moyen de déclenchement 7, et s'incline par rotation de son extrémité arrière 8.

La rotation de ladite extrémité arrière 8, emboîtée dans la fourche 12, entraîne la coopération de la fourche 12 avec la lumière 13 longitudinale dudit palpeur 3.

Le palpeur 3 pousse ainsi le moyen de déclenchement 7 en coulissement uniquement parallèlement à l'axe A, dans le sens d'introduction de la clef 4.

Le moyen de déclenchement 7, en coulissant dans le logement 2, notamment à l'intérieur de la bague cylindrique 10, comprime le ressort 11 entre la bride annulaire 9 dudit moyen de déclenchement 7 et la bague cylindrique 10.

Le moyen de déclenchement 7 coulisse à l'intérieur de la bague cylindrique 10 jusqu'à ce que la bride annulaire 9 du moyen de déclenchement 7 se retrouve à proximité de la bague cylindrique 10, afin de déclencher l'interrupteur électrique (non représenté).

Lors du retrait de la clef 4, le ressort 11 ramène le moyen de déclenchement 7 dans la position où la bride annulaire 9 dudit moyen de déclenchement 7 vient en butée contre une partie du logement 2. Ainsi, le palpeur 3 revient dans sa position basse de repos.

Le palpeur 3, le moyen de déclenchement 7 et le moyen de retenue 10 sont des pièces moulées en matière plastique.

Le rotor 1 ainsi défini permet de former un seul et unique ensemble, prêt à être monté dans un stator de verrou et dans lequel sont incorporés le palpeur 3, le ressort 11 et le moyen de déclenchement 7, le tout bloqué par la bague cylindrique 10.

La présente invention n'est pas limitée au mode de réalisation qui vient d'être décrit et porte dans sa généralité sur tous les rotors envisageables à partir des indications générales fournies dans l'exposé de l'invention.

Dans un autre mode de réalisation non représenté, le retour en position basse du palpeur peut s'effectuer grâce à une tige de commande de l'interrupteur électrique comportant des moyens élastiques.

Le rotor est alors intégré au verrou lors de sa fabrication, comme dans le document de l'art antérieur cité précédemment.

Le logement 2 du rotor ne contient alors que le palpeur 3 et le moyen de déclenchement 7, comme décrit ci-avant.

Le déclenchement de l'interrupteur se fait par l'intermédiaire du moyen de déclenchement 7, qui agit sur la tige de commande de l'interrupteur, les moyens élastiques de l'interrupteur ramenant le moyen de déclenchement 7 en butée contre une partie du logement, définissant le retour en position basse de repos du palpeur 3.

La fourche 12 du moyen de déclenchement 7 peut être remplacé par tout autre moyen de guidage de l'extrémité arrière 8 du palpeur 3, qui est intégré dans le logement 2 du rotor 1.

## Revendications

1. Rotor (1) de verrou comprenant un logement (2) longitudinal, ledit logement (2) contenant un palpeur (3) de commande, destiné à déclencher un interrupteur électrique pour la détection de l'introduction d'une clef (4) dans le rotor, ledit palpeur étant monté en coulissement parallèlement à l'axe (A) d'introduction de la clef (4), la partie d'extrémité avant (5) du palpeur, qui peut être poussée par la clef (4), coopèrant avec des moyens (6) du logement formant une rampe pour provoquer un déplacement de ladite partie d'extrémité avant (5), selon une direction inclinée par rapport à l'axe (A) entre une position basse de repos et une position haute de déclenchement, **caractérisé en ce que** le logement (2) contient en outre un moyen de déclenchement (7) de l'interrupteur, en butée avec l'extrémité arrière (8) du palpeur, ledit moyen de déclenchement (7) pouvant se déplacer uniquement parallèlement à l'axe (A).

2. Rotor de verrou selon la revendication 1, **caractérisé en ce que** le logement (2) contient en outre un organe de retenue (10), apte à retenir le moyen de déclenchement (7) de l'interrupteur à l'intérieur dudit logement (2).

3. Rotor de verrou la revendication 1 ou 2, **caractérisé en ce que** le logement (2) contient en outre un organe de rappel (11) en position de repos, apte à ramener le palpeur (3) en position basse de repos lorsque la clef (4) est retirée du rotor (1).

4. Rotor de verrou selon les revendications 2 et 3, **caractérisé en ce que** l'organe de rappel (11) est intercalé entre une bride annulaire (9) du moyen de déclenchement de l'interrupteur et l'organe de retenue (10).

5. Rotor de verrou selon l'une quelconque des revendications 2 à 4, **caractérisé en ce que** l'organe de retenue (10) est une bague cylindrique formant palier pour le moyen de déclenchement (7).

6. Rotor de verrou selon l'une quelconque des revendications 1 à 5, **caractérisé en ce que** le moyen de déclenchement (7) comprend une fourche (12), bloquant l'extrémité arrière (8) du palpeur dans une direction perpendiculaire à l'axe (A) d'introduction de la clef (4).

7. Rotor de verrou selon la revendication 6, **caractérisé en ce que** le palpeur (3) comprend un corps en forme de plaque, qui comprend une lumière (13) longitudinale, apte à coopérer avec la fourche (12) lorsque le palpeur (3) est en position haute de déclenchement.

8. Verrou d'antivol, **caractérisé en ce qu'**il contient un rotor (1) selon l'une quelconque des revendications 1 à 7.

## Claims

1. Lock rotor (1) comprising a longitudinal housing (2), said housing (2) containing a control sensor (3) intended to trip an electric switch for detecting the introduction of a key (4) into the rotor, said sensor being mounted such that it can slide parallel to the introduction axis (A) of the key (4), the front end part (5) of the sensor, which may be pushed by the key (4), engaging with housing means (6) forming a ramp for moving said front end part (5) in a direction inclined with respect to the axis (A) between a bottom or rest position and a top or tripping position, **characterized in that** the housing (2) also contains a means (7), in abutment with the rear end (8) of the sensor, for tripping the switch, said tripping means (7) being able to move only parallel to the axis (A).

2. Lock rotor according to Claim 1, **characterized in that** the housing (2) also contains a retaining member (10) able to retain the switch tripping means (7) inside said housing (2).

3. Lock rotor according to Claim 1 or 2, **characterized in that** the housing (2) also contains a return member (11) for restoring the rest position, able to return the sensor (3) into the bottom rest position when the key (4) is withdrawn from the rotor (1).

4. Lock rotor according to Claims 2 and 3, **characterized in that** the return member (11) is interposed between an annular flange (9) of the switch tripping means and the retaining member (10).

5. Lock rotor according to any one of Claims 2 to 4, **characterized in that** the retaining member (10) is a cylindrical ring forming a bearing for the tripping means (7).

6. Lock rotor according to any one of Claims 1 to 5, **characterized in that** the tripping means (7) comprises a fork (12) blocking the rear end (8) of the sensor in a direction perpendicular to the introduction axis (A) of the key (4).

7. Lock rotor according to Claim 6, **characterized in that** the sensor (3) comprises a body in the form of a plate, which comprises a longitudinal slot (13) able to engage with the fork (12) when the sensor (3) is in the top or tripping position.

8. Antitheft lock, **characterized in that** it contains a rotor (1) according to any one of Claims 1 to 7.

## Patentansprüche

1. Schlossrotor (1), der eine Längsaufnahme (2) enthält, wobei die Aufnahme (2) einen Steuertaster (3) enthält, der dazu bestimmt ist, einen Elektroschalter zur Erfassung des Einführens eines Schlüssels (4) in den Rotor auszulösen, wobei der Taster parallel zur Einführachse (A) des Schlüssels (4) gleitend montiert ist, wobei der vordere Endbereich (5) des Tasters, der vom Schlüssel (4) gedrückt werden kann, mit eine Rampe bildenden Einrichtungen (6) der Aufnahme zusammenwirkt, um eine Verschiebung des vorderen Endbereichs (5) gemäß einer bezüglich der Achse (A) geneigten Richtung zwischen einer unteren Ruhestellung und einer oberen Auslösestellung zu bewirken, **dadurch gekennzeichnet, dass** die Aufnahme (2) außerdem eine Auslöseeinrichtung (7) des Schalters enthält, die mit dem hinteren Ende (8) des Tasters in Anschlag ist, wobei die Auslöseeinrichtung (7) sich nur parallel zur Achse (A) verschieben kann.

2. Schlossrotor nach Anspruch 1, **dadurch gekennzeichnet, dass** die Aufnahme (2) außerdem ein Rückhalteelement (10) enthält, das die Auslöseeinrichtung (7) des Schalters im Inneren der Aufnahme (2) zurückhalten kann.

3. Schlossrotor nach Anspruch 1 oder 2, **dadurch gekennzeichnet, dass** die Aufnahme (2) außerdem ein Rückstellelement (11) in die Ruhestellung enthält, das den Taster (3) in die untere Ruhestellung zurückbringen kann, wenn der Schlüssel (4) aus dem Rotor (1) herausgezogen wird.

4. Schlossrotor nach den Ansprüchen 2 und 3, **dadurch gekennzeichnet, dass** das Rückstellelement (11) zwischen einen Ringflansch (9) der Auslöseeinrichtung des Schalters und das Rückhalteelement (10) eingefügt ist.

5. Schlossrotor nach einem der Ansprüche 2 bis 4, **dadurch gekennzeichnet, dass** das Rückhalteelement (10) ein zylindrischer Ring ist, der ein Lager für die Auslöseeinrichtung (7) bildet.

6. Schlossrotor nach einem der Ansprüche 1 bis 5, **dadurch gekennzeichnet, dass** die Auslöseeinrichtung (7) eine Gabel (12) enthält, die das hintere Ende (8) des Tasters in einer Richtung lotrecht zur Einführachse (A) des Schlüssels (4) blockiert.

7. Schlossrotor nach Anspruch 6, **dadurch gekennzeichnet, dass** der Taster (3) einen Körper in Form einer Platte enthält, die ein Längsloch (13) enthält, das mit der Gabel (12) zusammenwirken kann, wenn der Taster (3) in der oberen Auslösestellung ist.

8. Diebstahlsicherungsschloss, **dadurch gekennzeichnet, dass** es einen Rotor (1) nach einem der Ansprüche 1 bis 7 enthält.
